# EUROPÄISCHE PATENTSCHRIFT

(11) **EP 1 038 297 B1**
(45) Veröffentlichungstag und Bekanntmachung des Hinweises auf die Patenterteilung: **27.03.2002**
(21) Anmeldenummer: 97951117.7
(22) Anmeldetag: 11.12.1997
(51) Int. Cl.: G11B 19/02, G11B 27/10, G11B 20/10

(54) **PLATTENSPIELER ZUM ABSPIELEN VON PLATTEN MIT OPTISCH GESPEICHERTEN DATEN**
DISC PLAYER FOR PLAYING DISCS WITH OPTICALLY STORED DATA
LECTEUR DE DISQUE POUR LIRE DES DISQUES COMPORTANT DES DONNEES MEMORISEES SOUS FORME OPTIQUE

(43) Veröffentlichungstag der Anmeldung: 27.09.2000
(73) Patentinhaber: ROBERT BOSCH GMBH, 70442 Stuttgart (DE)
(72) Erfinder: BAAS, Dieter, D-77694 Auenheim (DE)
(86) Internationale Anmeldenummer: DE9702886
(87) Internationale Veröffentlichungsnummer: WO9930321

(56) Entgegenhaltungen:
- EP-A- 0 249 781
- EP-A- 0 400 810
- EP-A- 0 419 009
- EP-A- 0 626 690
- EP-A- 0 717 406
- DE-A- 19 650 054
- US-A- 5 199 019
- PATENT ABSTRACTS OF JAPAN vol. 097, no. 010, 31. Oktober 1997 & JP 09 161459 A (AIWA CO LTD), 20. Juni 1997
- PATENT ABSTRACTS OF JAPAN vol. 018, no. 074 (P-1688), 7. Februar 1994 & JP 05 282787 A (ALPINE ELECTRON INC), 29. Oktober 1993
- PATENT ABSTRACTS OF JAPAN vol. 012, no. 298 (P-744), 15. August 1988 & JP 63 070988 A (TOSHIBA CORP), 31. März 1988
- PATENT ABSTRACTS OF JAPAN vol. 016, no. 096 (P-1322), 10. März 1992 & JP 03 273586 A (PIONEER ELECTRON CORP), 4. Dezember 1991
- PATENT ABSTRACTS OF JAPAN vol. 012, no. 281 (E-641), 2. August 1988 & JP 63 059182 A (PIONEER ELECTRONIC CORP), 15. März 1988
- PATENT ABSTRACTS OF JAPAN vol. 097, no. 009, 30. September 1997 & JP 09 134586 A (SONY CORP), 20. Mai 1997

## Beschreibung

### Stand der Technik

Die Erfindung geht von einem Plattenspieler nach der Gattung des Hauptanspruches aus.

Aus der EP 0 626 690 A1 ist ein digitales Abspielgerät für Audiodiscs bekannt, bei dem digitale Audiodaten bei einer Geschwindigkeit in einen Speicher eingeschrieben werden, die größer oder gleich einer Geschwindigkeit ist, die einer normalen Wiedergabegeschwindigkeit entspricht. Die Daten werden aus diesem Speicher bei der normalen Wiedergabegeschwindigkeit ausgelesen. Auf diese Weise kann eine Wiedergabe zweier aufeinanderfolgender Musikstücke ohne Zwischenpause erfolgen. Es ist weiterhin eine Fading-Steuereinheit vorgesehen, die beim Übergang zweier nacheinander anzuspielender Musikstücke eine Lautstärkeregelung durchführt.

Der Anspruch 1 ist von dieser Sehrift abgegrenzt.

Aus der EP 0 249 781 A2 ist bereits ein Compactdisc (CD) - Spieler zum Abspielen von sogenannten CD-Platten bekannt, bei dem zwecks elektronischer Kompensation von Spursprüngen der Abtastoptik infolge von Erschütterungen oder Stößen im digitalen Datenverarbeitungspfad der Signalverarbeitungseinheit ein Schreib-Lese-Speicher zum Zwischenspeichern von Daten vorgesehen ist. Die Daten werden kontinuierlich aus dem Speicher ausgelesen, wobei der Auslesevorgang auch bei einem Spurverlust der Abtastoptik kontinuierlich fortgesetzt wird. Die Repositioniervorrichtung setzt die Abtastoptik nach einem Spursprung wieder zurück, während eine Synchronisiervorrichtung den Beginn des Speicher-Einschreibvorgangs nach der Repositionierung der Abtastoptik mit dem Ende des Speicher-Einschreibvorgangs vor dem Spursprung synchronisiert. Nach einem Spursprung wird der Speicher schnell wieder mit abgetasteten und aufbereiteten digitalen Daten aufgefüllt, so daß er für einen eventuellen nächsten Spursprung wieder ausreichend mit Auslesedaten gefüllt ist, um während des Spursprungs die Kontinuität des Auslesevorgangs sicherzustellen. Ist eine hinreichend große Datenmenge eingespeichert, wird die Einschreibfrequenz wieder auf den alten Wert reduziert. Die Auslesefrequenz des Speichers bleibt konstant.

### Vorteile der Erfindung

Der erfindungsgemäße Plattenspieler mit den Merkmalen des Hauptanspruchs hat demgegenüber den Vorteil, daß auch bei Spursprüngen, die nicht synchron repositioniert werden, ein kontinuierliches Auslesen des Schreib-Lese-Speichers zur Realisierung eines aufeinanderfolgenden partiellen Abspielens von auf einer Platte gespeicherten Musikstücken möglich ist. Auf diese Weise läßt sich ein Schnelldurchlauf der Platte realisieren, die dem Benutzer einen Überblick und eine Auswahl von Musikstücken ohne Störung des Hörgenusses ermöglicht.

Durch die in den Unteransprüchen aufgeführten Maßnahmen sind vorteilhafte Weiterbildungen und Verbesserungen des im Hauptanspruch angegebenen Plattenspielers möglich.

Vorteilhaft gemäß Anspruch 2 sind die vorgesehenen Sprungzeiten, während denen eine Abtastoptik einen Spursprung durchführt. Dadurch ist ein definierter Schnelldurchlauf der Platte möglich, wodurch sich ein repräsentativer Querschnitt der auf der Platte befindlichen Musikstücke bewirken läßt.

Vorteilhaft gemäß Anspruch 3 ist die Speicherung einer ausreichend großen Datenmenge im Schreib-Lese-Speicher mit der ersten Taktrate, um während der ganzen Dauer der Sprungzeiten eine Widergabe der Daten mit der zweiten Taktrate zu gewährleisten. Auf diese Weise werden die spursprünge vom Benutzer nicht als Unterbrechung der Wiedergabe wahrgenommen.

Vorteilhaft gemäß Anspruch 4 ist die Verwendung einer Steuereinheit, der die erste Taktrate zugeführt ist und die dem Schreib-Lese-Speicher die zweite Taktrate, die Adresse der auszugebenden und die Adresse der einzulesenden Daten zuführt und die mit einer Servoeinheit verbunden ist, zur Steuerung der Abtastoptik in Abhängigkeit der ersten Taktrate. Auf diese Weise sind Spursprünge zu vorgegebenen Spurpositionen und eine effiziente Verwaltung der im Schreib-Lese-Speicher abgespeicherten Daten, vor allem bezüglich Ein- und Auslesevorgang realisierbar, genauso wie die Kontrolle der ersten und der zweiten Taktrate zur Gewährleistung eines unterbrechungsfreien kontinuierlichen Abspielvorganges.

Vorteilhaft gemäß den Ansprüchen 5 bis 7 ist die Bewertung der Daten nach der Lautstärke, dem Takt, der Tonfrequenz mit Hilfe einer Auswerteeinheit, die mit der Steuereinheit verbunden ist, so daß eine vorgegebene Lautstärke, ein vorgegebener Takt, eine vorgegebene Tonfrequenz eingehalten werden können. Auf diese Weise wird erreicht, daß die aneinandergereihten akustisch wiedergegebenen Datensequenzen musikalisch zueinander passen und somit der Hörgenuß des Benutzers nicht gestört wird.

### Zeichnung

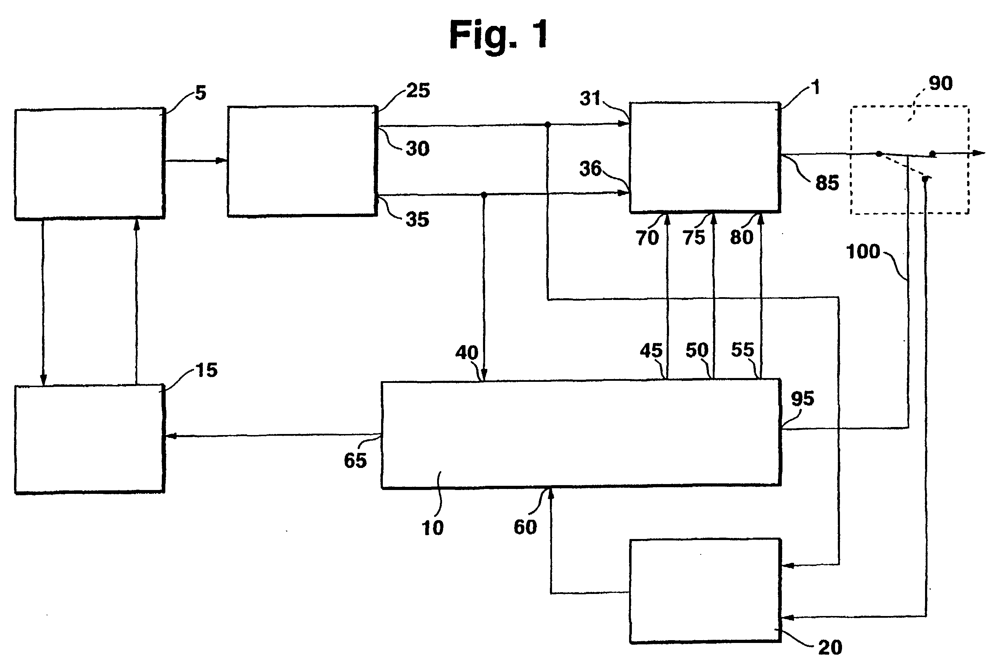

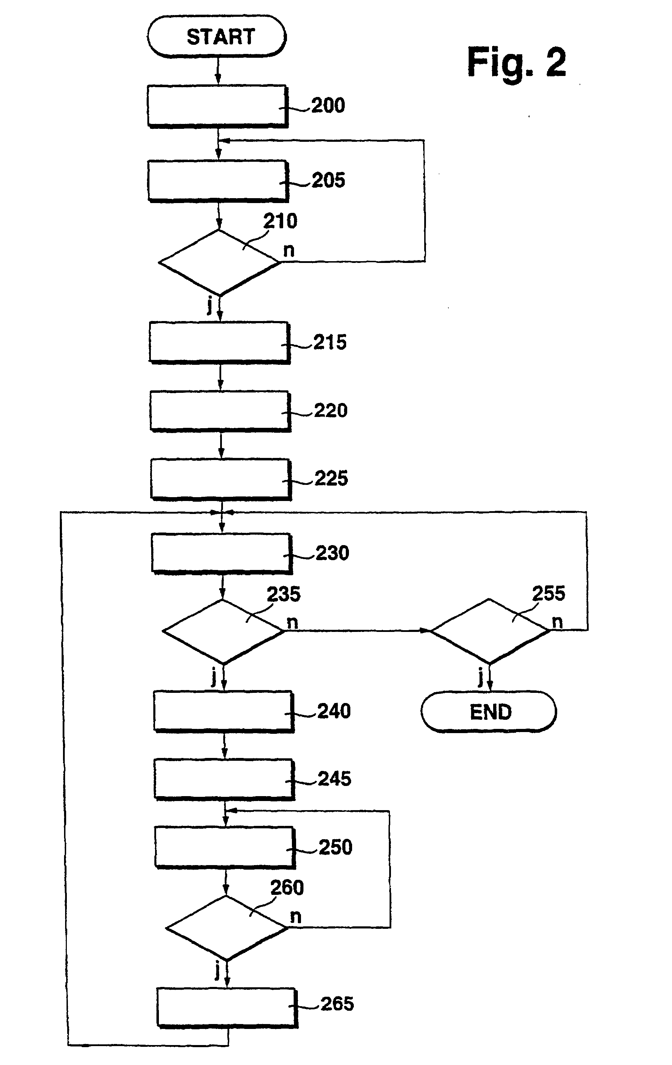

Ein Ausführungsbeispiel der Erfindung ist in der Zeichnung dargestellt und in der nachfolgenden Beschreibung näher erläutert. Es zeigen Figur 1 eine Schaltanordnung eines erfindungsgemäßen Plattenspielers und Figur 2 einen Ablaufplan für ein aufeinanderfolgendes partielles Abspielen von auf einer Compactdisc gespeicherten Musikstücken.

### Beschreibung des Ausführungsbeispiels

In Figur 1 kennzeichnet 5 eine Abtastoptik eines als CD-Spieler ausgebildeten Plattenspielers, die mit einer Servoeinheit 15 einen Regelkreis bildet. Die Daten, die die Abtastoptik 5 von einer als Compactdisc ausgebildeten Platte ausliest, werden in einem Decoder 25 entschlüsselt. Dabei sind die Daten in Spuren der Compact disc optisch digital abgespeicheretder Decoder 25 weist einen ersten Ausgang 30 zur Datenausgabe und einen zweiten Ausgang 35 zur Ausgabe einer ersten Taktrate auf. Der erste Ausgang 30 des Decoders 25 ist mit einem ersten Eingang 31 eines Schreib-Lese-Speichers 1 zur Dateneingabe verbunden und der zweite Ausgang 35 des Decoders 25 ist mit einem zweiten Eingang 36 des Schreib-Lese-Speichers 1 zur Eingabe der ersten Taktrate verbunden. Der Schreib-Lese-Speicher 1 besitzt einen Datenausgang 85 zur Ausgabe der Daten, die dann in bekannter Weise zu Gehör gebracht werden. Der zweite Ausgang 35 des Decoders 25 ist außerdem mit einem ersten Eingang 40 einer Steuereinheit 10 zur Eingabe der ersten Taktrate verbunden. Die Steuereinheit 10 weist außerdem einen ersten Ausgang 45 zur Ausgabe einer Adresse für die von dem Schreib-Lese-Speicher 1 an dessen ersten Einang 31 einzulesenden Daten, einen zweiten Ausgang 50 zur Ausgabe einer Adresse für die am Datenausgang 85 des Schreib-Lese-Speichers 1 auszulesenden Daten und einen dritten Ausgang 55 zur Abgabe einer zweiten Taktrate an den Schreib-Lese-Speicher auf. Der erste Ausgang 45 der Steuereinheit 10 ist mit einem dritten Eingang 70 des Schreib-Lese-Speichers 1 zur Aufnahme der Adresse für die einzulesenden Daten verbunden. Der zweite Ausgang 50 der Steuereinheit 10 ist mit einem vierten Eingang 75 des Schreib-Lese-Speichers 1 zur Aufnahme der Adresse für die auszulesenden Daten verbunden. Der dritte Ausgang 55 der Steuereinheit 10 ist mit einem fünften Eingang 80 des Schreib-Lese-Speichers 1 zur Aufnahme der zweiten Taktrate verbunden. Vom ersten Ausgang 30 des Decoders 25 werden die Daten weiterhin an eine Auswerteeinheit 20 weitergeleitet, die außerdem mit einem zweiten Eingang 60 der Steuereinheit 10 zur Aufnahme der Datenbewertung verbunden ist. Die Steuereinheit 10 ist schließlich über einen vierten Ausgang 65 zur Abgabe von Steuersignalen mit der Servoeinheit 15 verbunden.

Der erfindungsgemäße CD-Spieler mit der Schaltanordnung gemäß Figur 1 ermöglicht eine Betriebsart, bei der ein aufeinanderfolgendes partielles Abspielen von auf einer Compactdisc gespeicherten Musikstücken gemäß dem Ablaufplan in Figur 2 bewirkt wird. Wird diese Betriebsart vom Benutzer gewählt, so wird bei Programmpunkt 200 die Abtastoptik beispielsweise auf eine Stelle positioniert, die den Beginn des ersten Musikstückes markiert. Dann wird bei Programmpunkt 205 der Schreib-Lese-Speicher 1 beginnend bei der von der Steuereinheit 10 an den Schreib-Lese-Speicher 1 abgegebenen Adresse für die einzulesenden Daten mit den optisch und digital in den Spuren der Compactdisc abgespeicherten, von der Abtastoptik 5 gelesenen und vom Decoder 25 entschlüsselten Daten in Form von Datenblöcken gefüllt. Nach jeder Speicherplatzbelegung gemäß Programmpunkt 205 wird geprüft, ob der Schreib-Lese-Speicher 1 gefüllt ist. Ist dies der Fall, so wird zu Programmpunkt 215 verzweigt, andernfalls wird zu Programmpunkt 205 zurückverzweigt und der Füllvorgang fortgesetzt. Bei Programmpunkt 215 gibt die Steuereinheit 10 eine gültige Adresse für die auszulesenden Daten an den Schreib-Lese-Speicher ab. Diese Adresse entspricht zu Beginn der Adresse für die zuerst eingelesenen Daten. Auf diese Weise werden also zu Beginn nach Füllen des Schreib-Lese-Speichers 1 am Datenausgang 85 des Schreib-Lese-Speichers 1 die den Beginn des ersten Musikstückes kennzeichnenden Daten abgegeben und in bekannter Weise zu Gehör gebracht. Dies erfolgt mit der zweiten Taktrate, die bei Programmpunkt 220 ebenfalls von der Steuereinheit 10 an den Schreib-Lese-Speicher 1 abgegeben wird und konstant ist. Mit der zweiten Taktrate werden dann bis zum Ende des Programms bzw. dem aufeinander folgenden partiellen Abspielen die Daten aus dem Schreib-Lese-Speicher 1 ausgelesen. Das Füllen des Schreib-Lese-Speichers 1 erfolgt mit der ersten Taktrate, die variabel ist. Zur Erzeugung der ersten und der zweiten Taktrate kann ein nicht in Figur 1 dargestellter Quarzoszillator verwendet werden, der mit einem ersten ebenfalls nicht dargestellten Frequenzteiler mit festem Teilungsverhältnis zur Bildung der zweiten Taktrate und mit einem zweiten ebenfalls nicht dargestellten Frequenzteiler, dessen Teilungsverhältnis von der Steuereinheit 10 variabel einstellbar ist, verbunden sein kann. Am Ausgang des jeweiligen Frequenzteilers steht dann die variable erste Taktrate beziehungsweise die konstante zweite Taktrate zur Verfügung. In Abhängigkeit der der Steuereinheit 10 über den ersten Eingang 40 zugeführten ersten Taktrate wird die Servoeinheit 15 so gesteuert, daß die Abtastfrequenz der Compactdisc und die Plattengeschwindigkeit entsprechend an die erste Taktrate angepaßt werden. Für den initialen Einschreibvorgang des Schreib-Lese-Speichers 1 wird aus Gründen der Zeitersparnis sinnvollerweise eine erste Taktrate verwendet, die größer als die zweite Taktrate ist. Die Abtastfrequenz der Compactdisc und die Plattengeschwindigkeit sind dann ebenfalls entsprechend erhöht. Da die erste Taktrate und die Speicherkapazität des Schreib-Lese-Speichers 1 in der Steuereinheit 10 bekannt sind, ist auch der Zeitpunkt bekannt, zu dem der Schreib-Lese-Speicher 1 vollständig gefüllt ist und die Adresse der auszulesenden Daten mit der Adresse der zuerst eingelesenen Daten gleichzusetzen ist, so daß die Abfrage bei Programmpunkt 210 nach dem Füllstand des Schreib-Lese-Speichers 1 auch als Zeitabfrage realisiert sein kann. Bei Programmpunkt 225 wird dann die erste Taktrate an die zweite Taktrate angepaßt und bei Programmpunkt 230 wird die Abtastfrequenz der Compactdisc und die Plattengeschwindigkeit durch Steuerung der Servoeinheit 15 durch die Steuereinheit 10 entsprechend herabgesetzt. Der Schreib-Lese-Speicher 1 wird dann in dem Maße mit neuen Daten überschrieben, indem die alten Daten am Datenausgang 85 abgegeben werden. Auf diese Weise steht für einen Spursprung der gesamte Speicherinhalt des Schreib-Lese-Speichers 1 zum kontinuierlichen Auslesen während des Spursprungs mit der konstanten zweiten Taktrate zur Verfügung, so daß die maximale Dauer für einen Spursprung durch die zweite Taktrate und die Größe des Schreib-Lese-Speichers 1 festgelegt ist, unter der Voraussetzung, daß der Spursprung den Hörgenuß nicht beeinflussen soll. Voraussetzung zur Herbeiführung eines Spursprungs von Seiten der Steuereinheit 10 ist ein vollständig mit Daten gefüllter Schreib-Lese-Speicher 1. Ist diese Voraussetzung erfüllt, so kann zu beispielsweise vom Benutzer an einer mit der Steuereinheit 10 verbundenen und in Figur 1 nicht dargestellten Eingabeeinheit vorgebbaren Zeiten ein Spursprung durchgeführt werden. Bei Programmpunkt 235 wird in der Steuereinheit 10 geprüft, ob ein Spursprung durchgeführt werden soll. Ist dies der Fall, so wird zu Programmpunkt 240 verzweigt, andernfalls wird zu Programmpunkt 255 verzweigt. Bei Programmpunkt 240 erhält die Servoeinheit 15 von der Steuereinheit 10 ein entsprechendes Steuersignal, wodurch die Abtastoptik auf die nächste auszulesende Stelle positioniert wird. Während des Spursprungs werden die im Schreib-Lese-Speicher 1 gespeicherten Daten mit der konstanten zweiten Taktrate weiter ausgelesen, so daß der Hörgenuß nicht beeinträchtigt wird. Die Steuereinheit 10 registriert bei Programmpunkt 245 die Dauer des Spursprungs und kann daraus den Füllzustand des Schreib-Lese-Speichers 1 nach Beendigung des Spursprungs ermitteln. Nach Beendigung des Spursprungs wird die erste Taktrate bei Programmpunkt 250 erhöht, so daß sie größer als die zweite Taktrate ist, um den Scbreib-Lese-Speicher 1 wieder vollständig zu füllen. Die Abtastfrequenz der Compactdisc und die Plattengeschwindigkeit werden bei Programmpunkt 250 ebenfalls entsprechend erhöht. Bei Programmpunkt 260 wird geprüft, ob der Schreib-Lese-Speicher 1 wieder vollständig gefüllt ist. Ist dies der Fall, so wird zu Programmpunkt 265 verzweigt, andernfalls wird zu Programmpunkt 250 verzweigt und weiterhin mit erhöhter Taktrate gearbeitet. Ist der Schreib-Lese-Speicher 1 wieder vollständig gefüllt, so wird bei Programmpunkt 265 die erste Taktrate auf den Wert der zweiten Taktrate gesetzt und zu Programmpunkt 230 verzweigt, wo die Abtastfrequenz der Compactdisc und die Plattengeschwindigkeit entsprechend angepaßt werden. Bei Programmpunkt 255 wird geprüft, ob das Ende der Spur auf der Compactdisc erreicht ist. Ist dies der Fall, so wird das Programm beendet, andernfalls wird zu Programmpunkt 230 verzweigt und die Servoeinheit 15 weiterhin entsprechend durch die Steuereinheit 10 angesteuert.

Im Normalbetrieb ohne Spursprung wird die Adresse der auszulesenden Daten ständig an die Adresse der zuerst eingelesenen Daten angepaßt und die Adresse der einzulesenden Daten wird der Adresse der auszulesenden Daten zyklisch nachgeführt, indem sie beispielsweise an die Adresse der zuletzt ausgelesenen Daten angepaßt wird. Auf diese Weise läßt sich der Schreib-Lese-Speicher 1 effizient von der Steuereinheit 10 verwalten.

Während eines Spursprungs gibt die Steuereinheit 10 keine Adresse für einzulesende Daten an den Schreib-Lese-Speicher 1 ab, so daß in dieser Zeit keine neuen Daten in dem Schreib-Lese-Speicher einspeicherbar sind.

Nach Beendigung eines Spursprungs beziehungsweise der dafür ermittelten Zeitdauer sendet die Steuereinheit 10 wieder eine Adresse für einzulesende Daten an den Schreib-Lese-Speicher 1, so daß neue Daten vom Decoder 25 in den Schreib-Lese-Speicher 1 eingeschrieben werden können. Dabei werden solche Bereiche des Schreib-Lese-Speichers 1 für die einzulesenden Daten adressiert, die während dem vorhergegangenen Spursprung bereits ausgelesen wurden, so daß für die oben beschriebene Adressierungsart und bei wieder gefülltem Schreib-Lese-Speicher 1 die Adresse für die einzulesenden Daten von der Steuereinheit 10 auf die Adresse der zuletzt ausgelesenen Daten gesetzt wird.

Eine Möglichkeit zur Durchführung von definierten Spursprüngen ist durch Verwendung der Auswerteeinheit 20 realisierbar. Der Auswerteeinheit 20 werden die dem Schreib-Lese-Speicher 1 zugeführten Daten ebenfalls zugeführt. Dabei findet in der Auswerteeinheit 20 eine Bewertung der Daten nach der Lautstärke, dem Takt, der Tonfrequenz oder dergleichen statt. In Abhängigkeit der Bewertung der Daten durch die Auswerteeinheit 20 gibt die Steuereinheit 10 Sprungbefehle an die Servoeinheit 15 ab, die entsprechende Spursprünge der Abtastoptik 5 bei Programmpunkt 240 zur Folge haben, so daß eine vorgegebene Lautstärke, ein vorgegebener Takt, eine vorgegebene Tonfrequenz eingehalten wird.

Dies läßt sich auch dadurch bewirken, daß gemäß Figur 1 an dem Datenausgang 85 des Schreib-Lese-Speichers 1 ein Schalter 90 angeordnet wird, der über eine Steuerleitung 100 mit einem Schaltersteuerausgang 95 der Steuereinheit 10 verbunden ist und den Datenausgang 85 des Schreib-Lese-Speichers 1 wahlweise mit einem in Figur 1 nicht dargestellten Digital-Analog-Wandler zur Weiterverarbeitung der Daten oder mit der Auswerteeinheit 20 verbindet. Auf diese Weise kann die Steuereinheit 10 auch eine Bewertung der im Schreib-Lese-Speicher 1 gespeicherten Daten durch die Auswerteeinheit 20 bewirken und in Abhängigkeit der Bewertung der Daten in der Auswerteeinheit 20 Adressen des Schreib-Lese-Speichers 1 ermitteln, an denen Daten gespeichert sind, die eine vorgegebene Lautstärke, einen vorgegebenen Takt, eine vorgegebene Tonfrequenz oder dergleichen einhalten. Diese Adressen werden dann dem Schreib-Lese-Speicher 1 über den vierten Eingang 75 als Ausleseadressen übergeben, so daß Spursprünge nicht erforderlich sind und die Abtastoptik 5 erheblich weniger beansprucht wird. Anstelle eines Spursprungs bei Programmpunkt 240 erfolgt dann ein Adreßsprung im Schreib-Lese-Speicher 1 und anstelle der Ermittlung der Dauer des Spursprungs bei Programmpunkt 245 erfolgt die Ermittlung der Anzahl der im Schreib-Lese-Speicher 1 übersprungenen Speicherplätze, um den effektiven Füllzustand des Schreib-Lese-Speichers 1 zu bestimmen. Zur Verhinderung von Datenverlust am in Figur 1 nicht dargestellten Digital-Analog-Wandler hinter dem Schalter 90 sind dessen Eingangsdaten entsprechend zu puffern.

Ermöglicht wird diese Berücksichtigung der Dateneigenschaften durch die Trennung von Datenwiedergabe- und Auslesevorgang aus der Compactdisc. Auf diese Weise kann verhindert werden, daß von einer leisen Musikstelle direkt zu einer lauten Musikstelle, von einer Stelle mit niedriger Tonfrequenz zu einer Stelle mit hoher Tonfrequenz, von einer Stelle mit langsamem Takt zu einer Stelle mit schnellem Takt stattfindet und der Hörgenuß beeinträchtigt wird.

Durch die Steuereinheit 10 lassen sich mit Hilfe der Auswerteeinheit 20 auch Spursprünge zu Anfängen von nachfolgenden Musikstücken bewirken.

Es ist nicht unbedingt erforderlich, daß der Schreib-Lese-Speicher 1 vollständig gefüllt ist, wenn die Sprungzeiten entsprechend gering sind. Dadurch kann die Zeit zwischen zwei Spursprüngen verkürzt werden, da nach einem Spursprung der Schreib-Lese-Speicher 1 nicht vollständig gefüllt werden muß.

Mit Hilfe des erfindungsgemäßen Plattenspielers lassen sich nicht nur die für ein aufeinanderfolgendes partielles Abspielen von auf einer Platte gespeicherten Musikstücken erforderlichen Spursprünge überbrücken, sondern auch beispielsweise durch Erschütterungen oder Störungen der Servoeinheit 15 ausgelöste Spurverluste. Die richtige Spurposition kann dann durch entsprechend vorzusehende, geeignete Repositioniervorrichtungen wieder eingestellt werden.

## Patentansprüche

1. Plattenspieler zum Abspielen von Platten mit optisch gespeicherten Daten, bei welchen Informationen in Spuren digital abgespeichert sind, wobei der Plattenspieler einen Schreib-Lese-Speicher (1) zum Zwischenspeichern von Datenblöcken aufweist, die mit einer ersten Taktrate in den Schreib-Lese-Speicher (1) eingelesen und mit einer zweiten Taktrate aus dem Schreib-Lese-Speicher (1) ausgelesen werden, wobei die erste Taktrate größer oder gleich der zweiten Taktrate ist, wobei eine Betriebsart vorgesehen ist, bei der ein aufeinanderfolgendes partielles Abspielen von auf einer Platte gespeicherten Musikstücken bewirkt wird, **dadurch gekennzeichnet, daß** eine Auswerteeinheit (20) vorgesehen ist, die die Daten der aufeinanderfolgend abzuspielenden Musikstücke hinsichtlich ihrer Lautstärke, ihres Taktes oder ihrer Tonfrequenz bewertet, so daß eine vorgegebene Lautstärke, ein vorgegebener Takt oder eine vorgegebene Tonfrequenz eingehalten wird.

2. Plattenspieler nach Anspruch 1, **dadurch gekennzeichnet, daß** Sprungzeiten vorgesehen sind, während denen eine Abtastoptik (5) einen Spursprung durchführt.

3. Plattenspieler nach Anspruch 1 oder 2, **dadurch gekennzeichnet, daß** mit der ersten Taktrate eine ausreichend große Datenmenge im Schreib-Lese-Speicher (1) speicherbar ist, um während der ganzen Dauer der Sprungzeiten eine Wiedergabe der Daten mit der zweiten Taktrate zu gewährleisten.

4. Plattenspieler nach einem der vorherigen Ansprüche, **dadurch gekennzeichnet, daß** eine Steuereinheit (10) vorgesehen ist, der die erste Taktrate zugeführt ist und die dem Schreib-Lese-Speicher (1) die zweite Taktrate, die Adresse der auszugebenden und die Adresse der einzulesenden Daten zuführt und daß die Steuereinheit (10) mit einer Servoeinheit (15) verbunden ist, die die Abtastoptik (5) in Abhängigkeit der ersten Taktrate steuert.

5. Plattenspieler nach einem der vorherigen Ansprüche, **dadurch gekennzeichnet, daß** die dem Schreib-Lese-Speicher (1) zugeführten Daten außerdem der Auswerteeinheit (20) zur Bewertung der Daten nach der Lautstärke, dem Takt, der Tonfrequenz zuführbar sind und daß die Auswerteeinheit (20) mit der Steuereinheit (10) verbunden ist.

6. Plattenspieler nach einem der vorherigen Ansprüche, **dadurch gekennzeichnet, daß** die Steuereinheit (10) in Abhängigkeit der Bewertung der Daten durch die Auswerteeinheit (20) Sprungbefehle an die Servoeinheit (15) abgibt, die entsprechende Spursprünge der Abtastoptik (5) zur Folge haben, so daß die vorgegebene Lautstärke, der vorgegebene Takt, die vorgegebene Tonfrequenz eingehalten wird.

7. Plattenspieler nach einem der vorherigen Ansprüche, **dadurch gekennzeichnet, daß** die Steuereinheit (10) in Abhängigkeit der Bewertung der Daten durch die Auswerteeinheit (20) solche Adressen des Schreib-Lese-Speichers (1) ermittelt, an denen Daten gespeichert sind, die die vorgegebene Lautstärke, den vorgegebenen Takt, die vorgegebene Tonfrequenz einhalten.

## Claims

1. Disc player for playing discs containing optically stored data, which discs have information digitally stored in tracks, where the disc player has a read/write memory (1) for buffer-storing data blocks which are read into the read/write memory (1) at a first clock rate and are read from the read/write memory (1) at a second clock rate, the first clock rate being greater than or equal to the second clock rate, where an operating mode is provided which successively plays parts of pieces of music stored on a disc, **characterized in that** an evaluation unit (20) is provided which assesses the data of the pieces of music to be played successively in terms of their volume, their timing or their tone frequency, so that a prescribed volume, a prescribed timing or a prescribed tone frequency is observed.

2. Disc player according to Claim 1, **characterized in that** jump times are provided during which a scanning optical unit (5) jumps track.

3. Disc player according to Claim 1 or 2, **characterized in that** the first clock rate allows a sufficiently large volume of data to be stored in the read/write memory (1) to ensure reproduction of the data at the second clock rate for the entire duration of the jump times.

4. Disc player according to one of the preceding claims, **characterized in that** a control unit (10) is provided which is supplied with the first clock rate and supplies the read/write memory (1) with the second clock rate, the address of the data which are to be output and the address of the data which are to be read in, and **in that** the control unit (10) is connected to a servo unit (15) which controls the scanning optical unit (5) on the basis of the first clock rate.

5. Disc player according to one of the preceding claims, **characterized in that** the data supplied to the read/write memory (1) can also be supplied to the evaluation unit (20) for the purpose of assessing the data on the basis of the volume, the timing, the tone frequency, and **in that** the evaluation unit (20) is connected to the control unit (10).

6. Disc player according to one of the preceding claims, **characterized in that**, on the basis of the assessment of the data by the evaluation unit (20), the control unit (10) outputs jump commands to the servo unit (15) which result in corresponding track jumps by the scanning optical unit (5), so that the prescribed volume, the prescribed timing or the prescribed tone frequency is observed.

7. Disc player according to one of the preceding claims, **characterized in that**, on the basis of the assessment of the data by the evaluation unit (20), the control unit (10) ascertains the addresses in the read/write memory (1) at which data are stored and which observe the prescribed volume, the prescribed timing or the prescribed tone frequency.

## Revendications

1. Lecteur de disque pour lire des disques contenant des données à enregistrement optique, selon lequel les informations sont mémorisées de manière numérique dans des pistes,
le lecteur de disque comportant une mémoire enregistrement/lecture (1) pour enregistrer de façon intermédiaire des blocs de données enregistrés selon une première vitesse dans la mémoire enregistrement/lecture (1) et qui sont extraits de la mémoire enregistrement/lecture (1) à une seconde vitesse, la première vitesse étant supérieure ou égale à la seconde vitesse, un mode de fonctionnement étant prévu pour lequel on réalise une lecture partielle successive des morceaux musicaux enregistrés sur un disque,
**caractérisé par**
une unité d'exploitation (20) qui pondère les données des morceaux musicaux successifs à jouer, du point de vue de leur volume sonore, leur cadence ou de leur fréquence sonore pour respecter un volume sonore prédéterminé, une cadence prédéterminée ou une fréquence sonore prédéterminée.

2. Lecteur de disque selon la revendication 1,
**caractérisé par**
des durées de saut pendant lesquelles une optique de détection (5) effectue un saut de piste.

3. Lecteur de disque selon les revendications 1 ou 2,
**caractérisé en ce qu'**
à la première vitesse, on peut enregistrer une quantité de données suffisamment grande dans la mémoire enregistrement/lecture (1) pour que pendant toute la durée des sauts, on puisse assurer la reproduction des données à la seconde vitesse.

4. Lecteur de disque selon lune des revendications précédentes,
**caractérisé par**
une unité de commande (10) qui reçoit la première vitesse et fournit à la mémoire enregistrement/lecture (1) la seconde vitesse, l'adresse des données à émettre et celle des données à enregistrer, et
l'unité de commande (10) est reliée à une unité d'asservissement (15) qui commande l'optique de détection (5) suivant la première vitesse.

5. Lecteur de disque selon l'une des revendications précédentes,
**caractérisé en ce que**
les données fournies à la mémoire enregistrement/lecture (1) sont également fournies à l'unité d'exploitation (20) pour pondérer les données selon le volume sonore, la cadence et la fréquence du son, et l'unité d'exploitation (20) est reliée à l'unité de commande (10),

6. Lecteur de disque selon l'une des revendications précédentes,
**caractérisé en ce que**
l'unité de commande (10) fournit des ordres de saut à l'unité d'asservissement (15) en fonction de la pondération des données par l'unité d'exploitation (20), ces ordres entrainant les sauts de piste correspondants de l'optique de détection (5) pour respecter le volume sonore prédéterminé, la cadence prédéterminée et la fréquence sonore prédéterminée.

7. Lecteur de disque selon l'une des revendications précédentes,
**caractérisé en ce que**
l'unité de commande (10) détermine en fonction de l'exploitation des données par l'unité d'exploitation (20), les adresses de la mémoire enregistrement/lecture (1) auxquelles sont enregistrées les données correspondant au volume sonore prédéterminé, à la cadence prédéterminée et à la fréquence sonore prédéterminée.
